(19) Europäisches Patentamt
European Patent Office
Office européen des brevets

(11) **EP 1 240 706 B1**

(12) **EUROPÄISCHE PATENTSCHRIFT**

(45) Veröffentlichungstag und Bekanntmachung des Hinweises auf die Patenterteilung:
**27.07.2005 Patentblatt 2005/30**

(51) Int Cl.⁷: $H02M\ 5/257$, $H02P\ 1/28$

(21) Anmeldenummer: 00985196.5

(86) Internationale Anmeldenummer:
**PCT/EP2000/012938**

(22) Anmeldetag: **19.12.2000**

(87) Internationale Veröffentlichungsnummer:
**WO 2001/048903 (05.07.2001 Gazette 2001/27)**

(54) **VERFAHREN ZUM BETREIBEN EINER DREHSTROMSTELLERSCHALTUNG**

METHOD FOR OPERATING A 3-PHASE CONTROLLER CIRCUIT

PROCEDE PERMETTANT DE FAIRE FONCTIONNER UN CIRCUIT GRADATEUR DE COURANT TRIPHASE

(84) Benannte Vertragsstaaten:
**AT CH DE DK ES FR GB IT LI NL SE**

(30) Priorität: **23.12.1999 DE 19962292**

(43) Veröffentlichungstag der Anmeldung:
**18.09.2002 Patentblatt 2002/38**

(73) Patentinhaber: **Moeller GmbH**
**53115 Bonn (DE)**

(72) Erfinder: **MAGYAR, Peter**
**33813 Oerlinghausen (DE)**

(56) Entgegenhaltungen:
**EP-A- 0 926 809**    **US-A- 5 682 091**
**US-A- 5 796 245**

**Beschreibung**

Die Erfindung betrifft ein Verfahren zum Betreiben einer Drehstromstellerschaltung gemäß dem Oberbegriff des Anspruches 1. Derartige Drehstromstellerschaltungen werden häufig für die Spannungssteuerung von Drehstromlasten eingesetzt. Typische Anwendungen sind die Steuerung von ohmschen Lasten (z.B. elektrische Heizungen, Widerstandsanlasser von schleifringbehafteten Asynchronmaschinen,...), induktiven Lasten (z.B. Blindkompensationsanlagen) oder ohmsch-induktiven Lasten (wie z.B. schleifringlose Asynchronmaschinen).

Das Fachbuch "Leistungselektronik - Eine Einführung" (ISBN 3-540-60158-9), Manfred Michel, Springer-Verlag, 1996, S. 271 - S. 279, beschreibt bereits gattungsgemäße Drehstromsteller.

Hiernach sind bereits symmetrisch aufgebaute Drehstromsteller bekannt, bei denen jede Phase ein steuerbares Halbleiterelement aufweist. Diese Drehstromsteller, hier als symmetrisch gesteuerte Drehstromsteller bezeichnet, haben sich, insbesondere was die Steuerungseigenschaften bezüglich der Verbraucher angeht, bereits bewährt. Diese Drehstromsteller werden als "symmetrisch gesteuert" bezeichnet, da alle drei Phasen steuerbar sind und mit gleichem Zündwinkel gesteuert werden.

Desweiteren sind Drehstromsteller bekannt, die aus Kostengründen in lediglich zwei von drei Phasen steuerbare Halbleiterelemente aufweisen. Diese Drehstromsteller, hier als unsymmetrisch gesteuerte Drehstromsteller bezeichnet, weisen allerdings ungünstigere Steuerungseigenschaften auf. Diese Drehstromsteller werden als "unsymmetrisch gesteuert" bezeichnet, da zwei von drei Phasen mit gleichem Zündwinkel angesteuert werden und die dritte Phase, da ungesteuert, ein Verhalten aufweist, als würde sie dauernd mit einem Zündwinkel von 0° Grad angesteuert werden. Hierdurch entsteht eine asymmetrische Stromführung und somit eine asymmetrische thermische Belastung in den einzelnen Phasen. Weiterhin erhöht sich der Oberwelleninhalt und gegebenenfalls entsteht sogar eine zusätzliche Gleichstromkomponente des Stromes. Dies wiederum verursacht eine asymmetrische Leistungsverteilung innerhalb der Lastphasen während der Ansteuerung des Verbrauchers. Bei einer elektrischen Motorlast tritt hierdurch eine erhöhte Drehmomentschwankung auf:

Eine derartige unsymmetrische Ansteuerung eines Drehstromstellers bei der die beiden gesteuerten Phasenzweige bewusst mit gleichem Zündwinkel angesteuert werden ist in der US-A-5 682 091 beschrieben.

Der Erfindung liegt daher die Aufgabe zugrunde, bei Beibehaltung des reduzierten Bauteilaufwandes einer unsymmetrisch aufgebauten Drehstromstellerschaltung ein optimiertes Steuerverhalten derselben zu gewährleisten.

Ausgehend von einer Drehstromstellerschaltung der eingangs genannten Art wird die Aufgabe erfindungsgemäß durch das kennzeichnende Merkmal des unabhängigen Anspruches gelöst, während den abhängigen Ansprüchen vorteilhafte Weiterbildungen der Erfindung zu entnehmen sind.

Durch die asymmetrische Ansteuerung der Halbleiterschaltungen (Ansteuerung mit unterschiedlichen, auf die jeweilige Halbleiterschaltung abgestimmten, Zündwinkeln) in den beiden steuerbaren Phasenzweigen des Drehstromstellers wird gemäß der Erfindung die Unsymmetrie der drei Phasen (asymmetrische Stromführung usw.) ausgeglichen, so dass im wesentlichen drei symmetrische Phasen, mit angeglichenen Parametereigenschaften, entstehen. Gemäß der Erfindung wird dabei der Zündwinkel $\alpha$ mit einem Korrekturwinkel $\Delta\alpha$ beaufschlagt, wobei $0° \leq \Delta\alpha \leq 30°$ gewählt ist. Mit $\alpha$ ist der Winkel vom Nulldurchgang bis zum Beginn des Phasenanschnittes beschrieben. Im Zeitpunkt des Zündwinkels $\alpha = 0°$ beträgt $\Delta\alpha = 0°$, im Zeitpunkt des Zündwinkels $\alpha = 180°$ beträgt $\Delta\alpha = 30°$. Die Zündwinkelkorrektur (Änderung des Korrekturwinkels $\Delta\alpha$) im Zündwinkelintervall $\alpha = 0°$ bis 180° erfolgt gemäß einer stetigen, monoton ansteigenden Funktion ($\Delta\alpha = f(\alpha)$) mit $\Delta\alpha = 0°$ bei $\alpha = 0°$ und $\Delta\alpha = 30°$ bei $\alpha = 180°$. Die stetig monotone Funktion zwischen fixem Anfangs- und Endpunkt ($\Delta\alpha = 0°$, $\Delta\alpha = 30°$) ist in Abhängigkeit von der zu steuernden Last auszulegen und an diese individuell anzupassen. Die Funktion wird vorzugsweise empirisch durch Simulationsprozesse unter Verwendung herkömmlicher Simulationsprogramme am PC ermittelt. In einer anderen Ausführungsform kann die Funktion auch analytisch ermittelt werden. Diese Alternative ist allerdings mit aufwendigeren Berechnungen verbunden. Durch die asymmetrische Zündsteuerung der beiden Halbleiterschaltungen, wird erreicht, dass die Stromzufuhr, die Leistung oder die thermische Belastung der gesteuerten Phasen symmetriert und so alle drei Phasen angeglichen werden. Mit Vorteil wird bei diesem Verfahren der gewünschte zu symmetrierende Parameter (Strom, Spannung, Leistung, Temperatur,...) ausgewählt und die Halbleiterschaltungen asymmetrisch angesteuert, derart, dass der ausgewählte Parameter in allen drei Phasen angeglichen wird.

Die erfindungsgemäße Drehstromstellerschaltung ist vorzugsweise in ein Sanftanlaufgerät für Drehstrommotoren integriert. Hierdurch wird unter Verwendung eines asymmetrisch aufgebauten Drehstromstellers ein Motorsanftanlauf ohne Drehmomentschwankungen gewährleistet.

Weitere Einzelheiten und Vorteile der Erfindung ergeben sich aus den folgenden, anhand von Figuren erläuterten Ausführungsbeispielen. Es zeigen

Figur 1 a: eine Drehstromstellerschaltung mit steuerbaren Halbleiterschaltungen in den Phasenzweigen L2-T2 und L3-T3 und mit L1-T1 als ungesteuertem durchgehenden Phasenzweig ;

Figur 1b - 1 e: Vektordiagramme der Zündverhältnisse bei ungesteuertem Phasenzweig L1-T1 mit unterschiedlichen Phasenreihenfolgen und verschiedenen Bezugsspannungen für die Zündzeitpunkte der Halbleiterschaltungen;

Figur 2a: eine Drehstromstellerschaltung mit steuerbaren Halbleiterschaltungen in den Phasenzweigen L1-T1 und L3-T3 und mit L2-T2 als ungesteuertem durchgehenden Phasenzweig;

Figur 2b - 2e: Vektordiagramme der Zündverhältnisse bei ungesteuertem Phasenzweig L2-T2 mit unterschiedlichen Phasenreihenfolgen und verschiedenen Bezugsspannungen für die Zündzeitpunkte der Halbleiterschaltungen;

Figur 3a: eine Drehstromstellerschaltung mit steuerbaren Halbleiterschaltungen in den Phasenzweigen L1-T1 und L2-T2 und mit L3-T3 als ungesteuertem durchgehenden Phasenzweig ;

Figur 3b - 3e: Vektordiagramme der Zündverhältnisse bei ungesteuertern Phasenzweig L3-T3 mit unterschiedlichen Phasenreihenfolgen und verschiedenen Bezugsspannungen für die Zündzeitpunkte der Halbleiterschaltungen;

Figur 4a - 4c: Ersatzschaltbilder bei minimalem und bei maximalem Zündwinkel der Schaltung gemäß Fig.1a;

Figur 5a - 5c: empirisch ermittelte Winkelwerte der Zündkompensation $\Delta\alpha$ sowie die physikalischen Zündwinkel $\alpha1$, $\alpha2$ in Tabellen- und Diagrammdarstellung, für eine Anordnung mit ungesteuerter Phase L3-T3 bei Widerstandslast und bei Motorlast;

Figur 6a: die Wirkungsweise eines Zündsteuerverfahren nach dem Stand der Technik bei Widerstandslast, mit symmetrischer Zündsteuerung;

Figur 6b: die Wirkungsweise des erfindungsgemäßen Zündsteuerverfahren bei Widerstandslast, mit asymmetrischer Zündsteuerung;

Figur 7a: die Wirkungsweise eines Zündsteuerverfahren nach dem Stand der Technik bei Motorlast, mit symmetrischer Zündsteuerung; und

Figur 7b: die Wirkungsweise des erfindungsgemäßen Zündsteuerverfahren bei Motorlast, mit asymmetrischer Zündsteuerung.

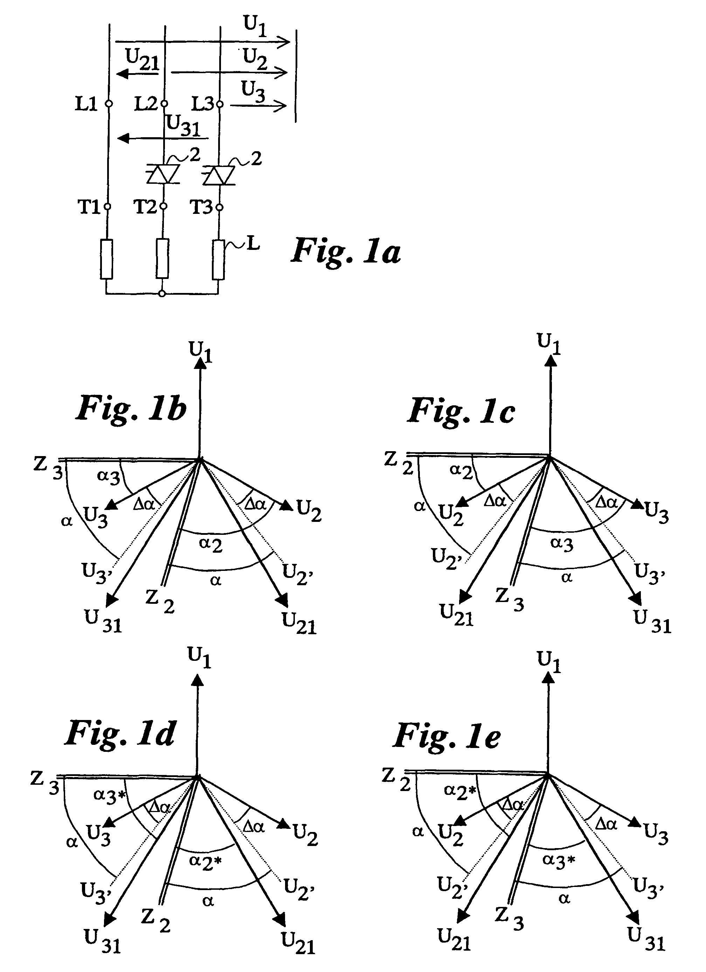

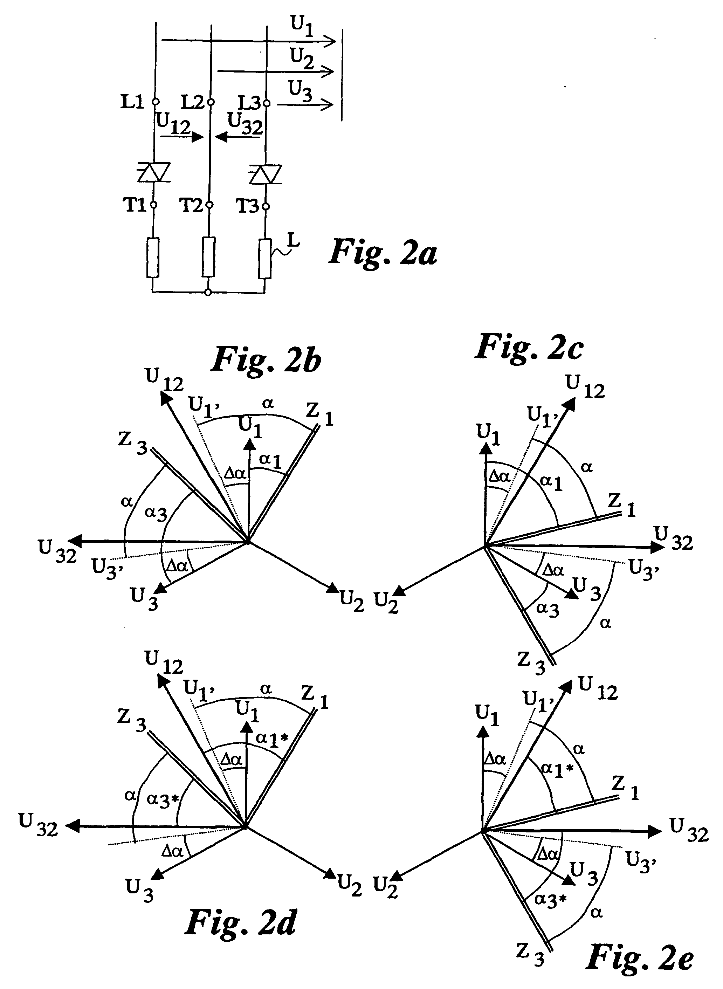

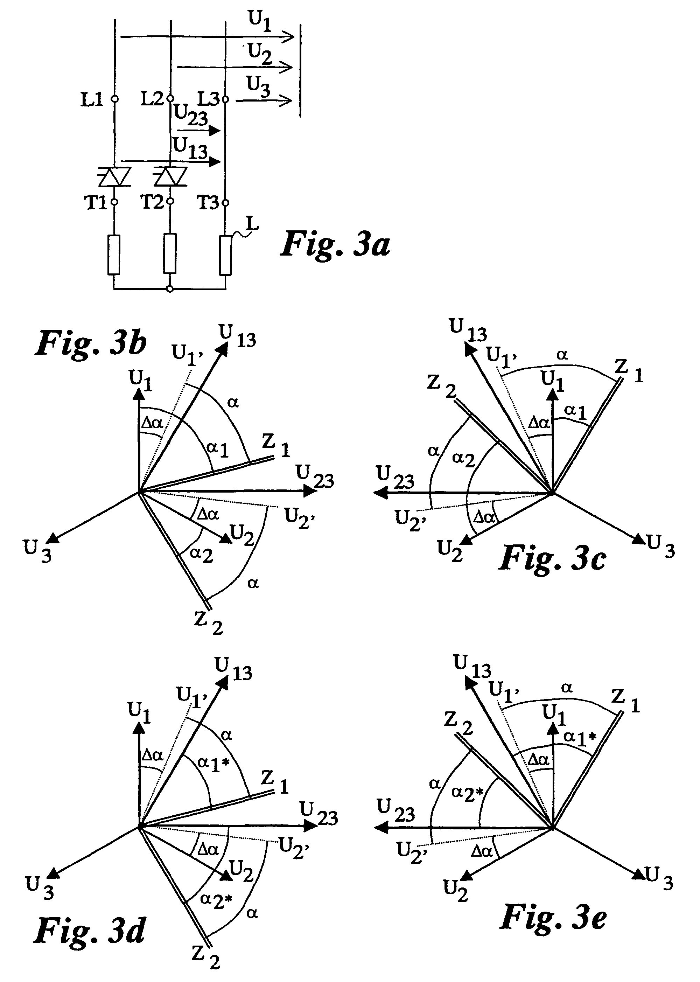

Zur Erläuterung des erfindungsgemäßen Verfahren zum Betreiben einer Drehstromstellerschaltung mit zwei gesteuerten und einem ungesteuerten Phasenzweig wird beispielhaft die Schaltungsanordnung gemäß Fig. 1a erläutert. Hier ist der Phasenzweig L1-T1 ungesteuert, "durchgehend" ausgebildet, während die beiden anderen Phasenzweige L2-T2 und L3-T3 jeweils eine steuerbare Halbleiterschaltung 2 aufweisen und dementsprechend die steuerbaren Phasenzweige bilden. Natürlich sind auch alle anderen Varianten, bei denen einer von drei Phasenzweigen nicht steuerbar und die beiden anderen Phasenzweige steuerbar sind, äquivalent im Sinne der Erfindung zu behandeln (Fig. 2a - 2e und Fig. 3a - 3e).

Fig. 1a zeigt in schematischer Darstellung eine dreiphasige Drehstromstellerschaltung mit den Eingangsklemmen L1, L2, L3 zum Anschluß an ein Drehstromnetz mit den Phasenspannungen U1, U2, U3 und den lastseitigen Ausgangsklemmen T1, T2, T3 zum Anschluß einer Drehstromlast L. In der dargestellten Ausführung ist in den beiden Phasenzweigen L2-T2 und L3-T3 jeweils eine steuerbare Halbleiterschaltung 2 angeordnet. Somit sind zwei von drei Phasenzweigen steuerbar, so dass eine asymmetrisch (unsymmetrisch) ausgebildete Drehstromstellerschaltung vorliegt. Die Halbleiterschaltungen 2 sind mit Vorteil als antiparallel geschaltete Thyristorpaare, als Triacs oder dergleichen ausgebildet.

Diese asymmetrisch ausgebildete Drehstromstellerschaltung wird gemäß der Erfindung auch asynchron angesteuert, so dass Unsymmetrien, die bei symmetrischer Ansteuerung dieser Schaltung zwangsläufig auftreten, ausgeglichen werden. Hierfür wird gemäß der Erfindung ein zu symmetrierender Parameter ausgewählt und die Halbleiterschaltungen derart angesteuert, dass der ausgewählte Parameter in allen drei (verketteten) Phasenzweigen angeglichen wird. Gemäß der Erfindung wird hierfür der Zündwinkel $\alpha$ mit einem Korrekturwinkel $\Delta\alpha$ beaufschlagt, wobei $0° \leq \Delta\alpha \leq 30°$ gewählt ist. Im Zeitpunkt des Zündwinkels $\alpha = 0°$ beträgt $\Delta\alpha = 0°$, im Zeitpunkt des Zündwinkels $\alpha = 180°$ beträgt $\Delta\alpha = 30°$. Die Zündwinkelkorrektur (Änderung des Korrekturwinkels $\Delta\alpha$) im Zündwinkelintervall $\alpha = 0°$ bis 180° erfolgt gemäß einer stetigen, monoton ansteigenden Funktion ($\Delta\alpha = f(\alpha)$) mit $\Delta\alpha = 0°$ bei $\alpha = 0°$ und $\Delta\alpha = 30°$ bei $\alpha = 180°$. Die stetig monotone Funktion zwischen fixem Anfangs- und Endpunkt ($\Delta\alpha = 0°$, $\Delta\alpha = 30°$) ist in Abhängigkeit von der zu steuernden Last auszulegen und an diese individuell anzupassen. Diese Funktion wird vorzugsweise empirisch durch Simulationsprozesse unter Verwendung herkömmlicher Simulationsprogramme am PC ermittelt. Hierfür wird in Abhängigkeit von einem geeigneten Systemparameter ein Symmetrierungskriterium ausgesucht. Der geeignetste Parameter wird in der Regel in Abhängigkeit von der zu steuernden Last und/oder der zu steuernden Halbleiterschaltung 2 gewählt. Ein wichtiger Parameter ist der Phasenstrom; aber auch Parameter wie Phasenspannung, die in den Halbleiterschaltungen auftretende Verlustleistung, Leistung, Temperatur oder dergleichen können, je nach Anwendung, vorteilhafte Größen darstellen.

Die Fig. 1b - 1 e sollen der Erläuterung des erfindungsgemäßen Verfahren dienen.
Fig. 1b zeigt das zu Fig. 1a zugehörige Vektordiagramm mit der Phasenreihenfolge U1, U2, U3, wobei als Bezugsgrößen für die tatsächlichen Zündwinkel $\alpha2$, $\alpha3$ der zu steuernden Phasen die Phasenspannungen U2 und U3 dienen. Neben den Phasenspannungen U1, U2, U3 haben auch die beiden verketteten Spannungen U21 = U2 - U1 und U31 = U3 - U1 eine Bedeutung. Diese beiden verketteten Spannungen sind die Spannungen zwischen den beiden gesteuerten Phasen L2-T2, L3-T3 und der ungesteuerten Phase L1-T1. Das zugehörige Vektordiagramm der drei Phasenspannungen U1, U2, U3 und der beiden verketteten Spannungen U21, U31 ist in den Fig. 1b, 1 c dargestellt. Fig. 4a - 4c zeigen die Ersatzschaltbilder bei minimalem ($\alpha$ = 0°) und bei maximalem Zündwinkel ($\alpha$ = 180°) der Schaltung gemäß Fig.1a. Hier werden zwei Grenzfälle betrachtet:

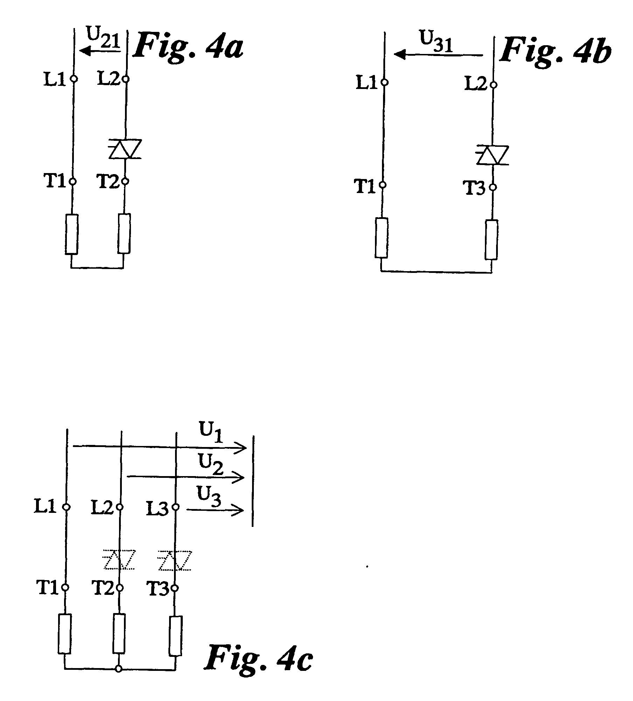

1. Bei großen Zündwinkeln ($\alpha$ =180°) wirken die beiden gesteuerten Phasen unabhängig voneinander wie zwei Wechselstromsteller, gespeist mit den beiden verketteten Spannungen U21 und U31 und belastet von zwei Phasen der Last (Fig. 4a, 4b)
2. Bei kleinen Zündwinkeln ($\alpha$ =0°) dagegen ist die Wirkung der beiden Thyristorpaare vernachlässigbar; in allen drei Phasen wird der Laststrom durch die drei Phasenspannungen bestimmt (Fig. 4c).

Man sieht, daß eine Art von Symmetrierung so zu erreichen ist, daß

- im ersten Fall die verketteten Spannungen als Bezugsspannungen gewählt werden und die Zündung zu diesen Spannungen synchronisiert werden muß,
- im zweiten Fall die Phasenspannungen als Bezugsspannungen gewählt werden und die Zündung zu diesen Spannungen synchronisiert werden muß.
- Im allgemeinen Fall aber, weil die verketten Spannungen U21 und U31 bzw. die Phasenspannungen U2 und U3 verschiedene Phasenlagen haben (Verschiebung von +30° bzw. -30°), sind weder die Phasenspannungen noch die verketteten Spannungen als Bezugsspannungen für eine symmetrierte Zündsteuerung geeignet.

Die Fig. 1c zeigt analog das Vektordiagramm bei der Phasenfolge U1, U3, U2.

Erläuterung gemäß Fig. 1b:

Für den allgemeinen Fall, 0° < Zündwinkel $\alpha$ < 180°, wird ein virtuelles Vektordiagramm mit den Spannungen U1, U2', U3' gewählt. Hierbei sind die virtuellen Spannungen U2', U3' um +$\Delta\alpha$ beziehungsweise -$\Delta\alpha$ gegenüber den realen Spannungen U2, U3 phasenverschoben (Phasenlage U2 + $\Delta\alpha \Rightarrow$ Phasenlage U2'; Phasenlage U3 - $\Delta\alpha \Rightarrow$ Phasenlage U3', 0° $\leq \Delta\alpha \geq$ 30°). Somit haben die virtuellen Spannungen U2'und U3'jeweils Phasenlagen zwischen den zugehörigen Phasen U2, U3 und den zugehörigen verketteten Spannungen U21, U31. Für den Fall $\Delta\alpha$ = 30° haben die virtuellen Spannungen U2', U3' die gleiche Phasenlage wie die zugehörigen verketteten Spannungen U21, U31. Für den Fall $\Delta\alpha$ = 0° hingegen stimmt die Phasenlage der virtuellen Spannungen U2', U3' mit der Phasenlage der Phasenspannungen U2, U3 überein.

Ausgehend von der virtuellen Spannung U2' ist die Phasenlage des Zündungszeitpunktes z2 für die Halbleiterschaltung 2 im Phasenzweig L2-T2 um den Winkel $\alpha$ verschoben. Der reale Zündwinkel $\alpha2$ im Phasenzweig L2-T2 (Phasenlage zwischen Phasenspannung U2 und Zündzeitpunkt z2 der zugehörigen Halbleiterschaltung 2) ergibt sich demnach wie folgt: $\alpha2 = \alpha + \Delta\alpha$.

Ausgehend von der virtuellen Spannung U3' ist die Phasenlage des Zündungszeitpunktes z3 für die Halbleiterschaltung 2 im Phasenzweig L3-T3 ebenfalls um den Winkel $\alpha$ verschoben. Der reale Zündwinkel $\alpha3$ im Phasenzweig L3-T3 (Phasenlage zwischen Phasenspannung U3 und Zündzeitpunkt z3 der zugehörigen Halbleiterschaltung 2) ergibt sich demnach wie folgt: $\alpha3 = \alpha - \Delta\alpha$.

Fig. 1 c zeigt das entsprechende Vektordiagramm bei der Phasenfolge U1, U3, U2. Hier gelten: $\alpha2 = \alpha - \Delta\alpha$, $\alpha3 = \alpha + \Delta\alpha$

Schaltungsvarianten mit dem nicht gesteuerten Phasenzweig L2-T2 oder L3-T3 gemäß Fig. 2a - 2c und Fig. 3a - 3c werden analog behandelt. Für die Schaltung gemäß Fig. 2a gilt bei der Phasenfolge U1, U2, U3: $\alpha1 = \alpha - \Delta\alpha$, $\alpha3 = \alpha + \Delta\alpha$ und bei der Phasenfolge U1, U3, U2: $\alpha1 = \alpha + \Delta\alpha$, $\alpha3 = \alpha - \Delta\alpha$. Für die Schaltung gemäß Fig. 3a gilt bei der Phasenfolge U1, U2, U3: $\alpha1 = \alpha + \Delta\alpha$, $\alpha2 = \alpha - \Delta\alpha$ und bei der Phasenfolge U1, U3, U2: $\alpha1 = \alpha - \Delta\alpha$, $\alpha2 = \alpha + \Delta\alpha$.

Hieraus kann eine allgemeingültige Gesetzmäßigkeit abgeleitet werden. Ausgehend davon, dass die auf die Eingangsklemme Ln (n = 1, 2, 3) geschaltete Phasenspannung als un (n = 1, 2, 3) bezeichnet wird und die Schaltungsanordnung - also die ungesteuerte Phase - bekannt ist, ergeben sich die beiden verketteten Spannungen zu uji = uj - ui (j = 1, 2, 3, j ≠ i) und uki = uk - ui (k ≠ i, k ≠ j), wobei "j" die Phase bezeichnet, die der Phase "i" folgt und k die Phase bezeichnet, die der Phase j folgt. Für die Zündwinkel der gesteuerten Pha-

sen gilt $\alpha j = \alpha + \Delta\alpha$ und $\alpha k = \alpha - \Delta\alpha$. Ausgehend von den virtuellen Spannungen uj', uk' beträgt der Stellbereich des Zündwinkels $\alpha$ 0° bis 180°. Die Zündwinkelkorrektur durch $\Delta\alpha$ ist eine stetige monotone Funktion von $\alpha$ ($\Delta\alpha = f(\alpha)$ mit $\Delta\alpha = 0°$ wenn $\alpha = 0°$ und $\Delta\alpha = 30°$ wenn $\alpha = 180°$).

Wählt man nicht den Zündwinkel $\alpha$ als Leitwinkel, sondern den Zündwinkel $\alpha j$ der voreilenden Phase, dann ergibt sich:

$$\alpha k = \alpha j - 2\Delta\alpha; \; 0° \leq \alpha j \leq 210° \text{ und } \Delta\alpha = f(\alpha j), \text{ wobei}$$
$$\Delta\alpha = 0° \text{ wenn } \alpha j = 0° \text{ und } \Delta\alpha = 30° \text{ wenn } \alpha j = 210°.$$

Wählt man als Leitwinkel den Zündwinkel $\alpha k$ der nachlaufenden Phase, dann ergibt sich:

$$\alpha j = \alpha k + 2\Delta\alpha; \; 0° \leq \alpha k \leq 150° \text{ und } \Delta\alpha = f(\alpha k), \text{ wobei}$$
$$\Delta\alpha = 0° \text{ wenn } \alpha k = 0° \text{ und } \Delta\alpha = 30° \text{ wenn } \alpha k = 150°.$$

Eine weitere Möglichkeit der Zündwinkelkorrektur besteht darin, die Zündsteuerung zu der direkt meßbaren verketteten Spannung zu synchronisieren. Diese Möglichkeit wird in den Figuren 1d, 1e; 2d, 2e und 3d, 3e veranschaulicht. Hierbei sind die Zündwinkel $\alpha_j^*$ bzw. $\alpha_k^*$ bezogen auf die verketteten Spannungen $u_{ji}$ bzw. $u_{ki}$ bezeichnet. Es ergeben sich folgende Zusammenhänge:

- Mit dem Leitzündwinkel $\alpha$

$$\alpha_j^* = \alpha - 30° + \Delta\alpha$$

$$\alpha_k^* = \alpha + 30° - \Delta\alpha$$

wobei
$0° \leq \alpha \leq 180°$ und $\Delta\alpha = f(\alpha)$; ($\Delta\alpha = 0°$, wenn $\alpha = 0°$ und $\Delta\alpha = 30°$, wenn $\alpha = 180°$)

- Mit dem Leitzündwinkel $\alpha_j^*$

$$\alpha_k^* = \alpha_j^* + 60° - 2\Delta\alpha$$

wobei
$-30° \leq \alpha_j^* \leq 150°$
$+30° \leq \alpha_k^* \leq 210°$
und
$\Delta\alpha = f(\alpha_j^*)$; ($\Delta\alpha = 0°$, wenn $\alpha_j^* = -30°$ und $\Delta\alpha = 30°$, wenn $\alpha_j^* = 150°$)

- Mit dem Leitzündwinkel $\alpha_k^*$

$$\alpha_j^* = \alpha_k^* - 60° + 2\Delta\alpha$$

wobei

$-30° \leq \alpha_j^* \leq 150°$
$+30° \leq \alpha_k^* \leq 210°$
und
$\Delta\alpha = f(\alpha_k^*)$; ($\Delta\alpha = 0°$, wenn $\alpha_k^* = +30°$ und $\Delta\alpha = 30°$, wenn $\alpha_k^* = 210°$).

Betrachtet man jetzt die Symmetrierungsbedingungen, müssen bei der Bestimmung des Zündkorrektionswinkels $\Delta\alpha$ folgende Gesichtspunkte in Betracht gezogen werden:

1. Es muß ein Kriterium gewählt werden, wonach die Symmetrierung durchgeführt wird. Solche Kriterien können beispielsweise sein:

- Symmetrierung der Ströme (Effektivwert oder die Grundkomponente), der Wirkleistung der gesteuerten Phasen
- Symmetrierung der Verlustleistung der Halbleiterelemente der gesteuerten Phasen, oder
- sonstige technologische oder betriebsbedingte Kriterien.

2. Die Gesetzmäßigkeit der asymmetrischen Zündsteuerung (Ablauf der $\Delta\alpha = f(\alpha)$-Kurve) muß an die Last angepaßt werden.

Betrachtet man z.B. Grenzfälle, wie reine Widerstandslast oder reine induktive Last, dann lassen sich folgende Unterschiede feststellen:

- Bei Widerstandslast ($\cos\varphi = 1$) ist der Bereich des Lückbetriebs größer; eine 180° Stromführungsdauer pro Halbwelle entsteht nur bei dem Zündwinkel 0°; bei induktiver Last ($\cos\varphi = 0$) entsteht dagegen schon bei dem Zündwinkel 90° eine Stromführungsdauer von 180°.
- Die Notwendigkeit der asymmetrischen Zündsteuerung ergibt sich aus den strukturellen Unterschieden zwischen dem Lückbetrieb und der 3-phasigen Stromführung. Daher benötigen diese typischen Lastarten eine voneinander sehr unterschiedliche Zündkompensation.
- Bei Zwischenfällen, z.B. bei Motorlast, ergibt sich eine Zündkompensation, die zwischen den oben erwähnten Grenzfällen liegt.

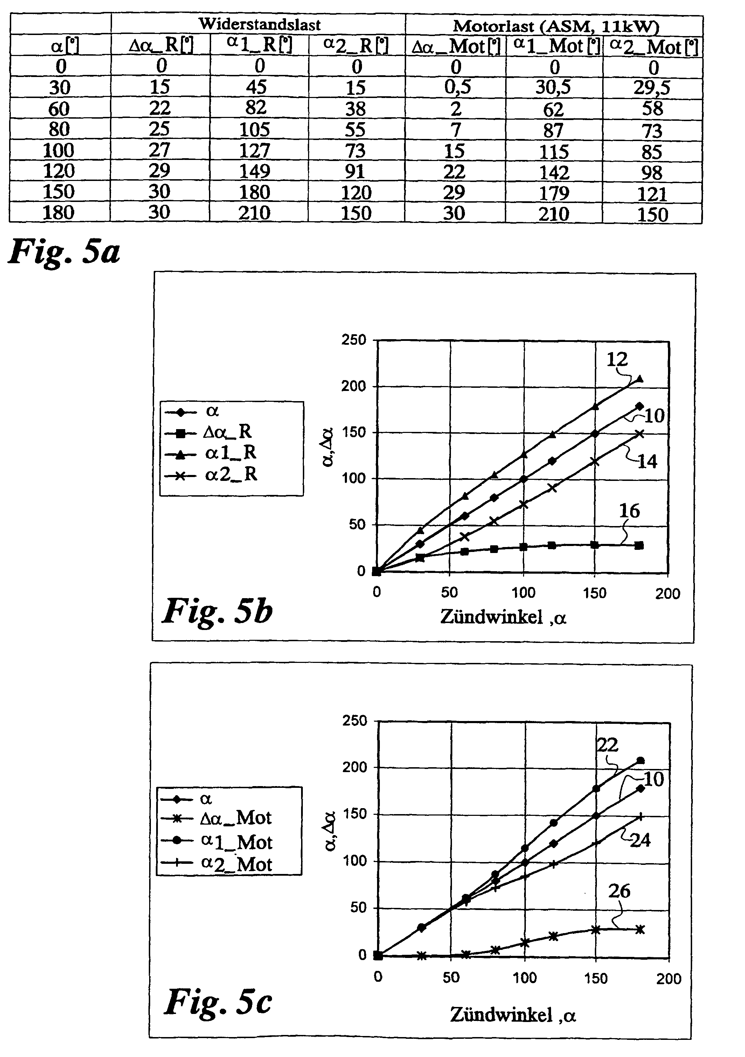

Im Folgenden soll anhand der Fig. 5-7 die Zündkompensation am Beispiel von Widerstands- und Motorlast (11 kW - Asynchronmotor) verdeutlicht werden. Als Kriterium für die Symmetrierung wurde hier beispielhaft der gleichmäßige Stromverlauf der gesteuerten Phasen gewählt.

In Fig.5a - 5c sind empirisch ermittelte Werte für die Zündkompensation $\Delta\alpha$, sowie die physikalischen Zündwinkel $\alpha 1$, $\alpha 2$ (für die Anordnung nach Fig. 3a) tabellarisch zusammengefaßt und graphisch dargestellt, wobei die Indizes _R und _Mot auf die Widerstands- und Motorlast hinweisen. In Fig. 5b ist die Zündwinkelkorrektur eines asymmetrisch aufgebauten Drehstromstellers mit L3-T3 als ungesteuertem Phasenzweig bei einer ohmschen Widerstandslast veranschaulicht. Dabei ist jeweils der tatsächliche Zündwinkel ($\alpha1\_R$ (alfa_1_R); $\alpha2\_R$ (alfa_2_R)) der zu steuernden Halbleiterschaltungen 2 in Abhängigkeit vom linear ansteigenden nicht korrigierten Zündwinkel $\alpha$ dargestellt. Die Kurve des nicht korrigierten Zündwinkels $\alpha$ ist mit 10, die Kurve des korrigierten Zündwinkels $\alpha1\_R$ für den Phasenzweig L1-T1 mit 12 und die Kurve des korrigierten Zündwinkels $\alpha2\_R$ für den Phasenzweig L2-T2 mit 14 bezeichnet. Die Kurve mit dem Bezugszeichen 16 veranschaulicht die Veränderung des Zündkorrekturwinkels $\Delta\alpha$.

In Fig. 5c ist die Zündwinkelkorrektur eines asymmetrisch aufgebauten Drehstromstellers mit L3-T3 als ungesteuertem Phasenzweig bei einer Motorlast veranschaulicht. Dabei ist jeweils der tatsächliche Zündwinkel ($\alpha1\_Mot$ (alfa_1_Mot); $\alpha2\_Mot$ (alfa_2_Mot)) der zu steuernden Halbleiterschaltungen 2 in Abhängigkeit vom linear ansteigenden nicht korrigierten Zündwinkel $\alpha$ dargestellt. Die Kurve des nicht korrigierten Zündwinkels $\alpha$ ist mit 10, die Kurve des korrigierten Zündwinkels $\alpha1\_Mot$ für den Phasenzweig L1-T1 mit 22 und die Kurve des korrigierten Zündwinkels $\alpha2\_Mot$ für den Phasenzweig L2-T2 mit 24 bezeichnet. Die Kurve mit dem Bezugszeichen 26 veranschaulicht die Veränderung des Zündkorrekturwinkels $\Delta\alpha$.

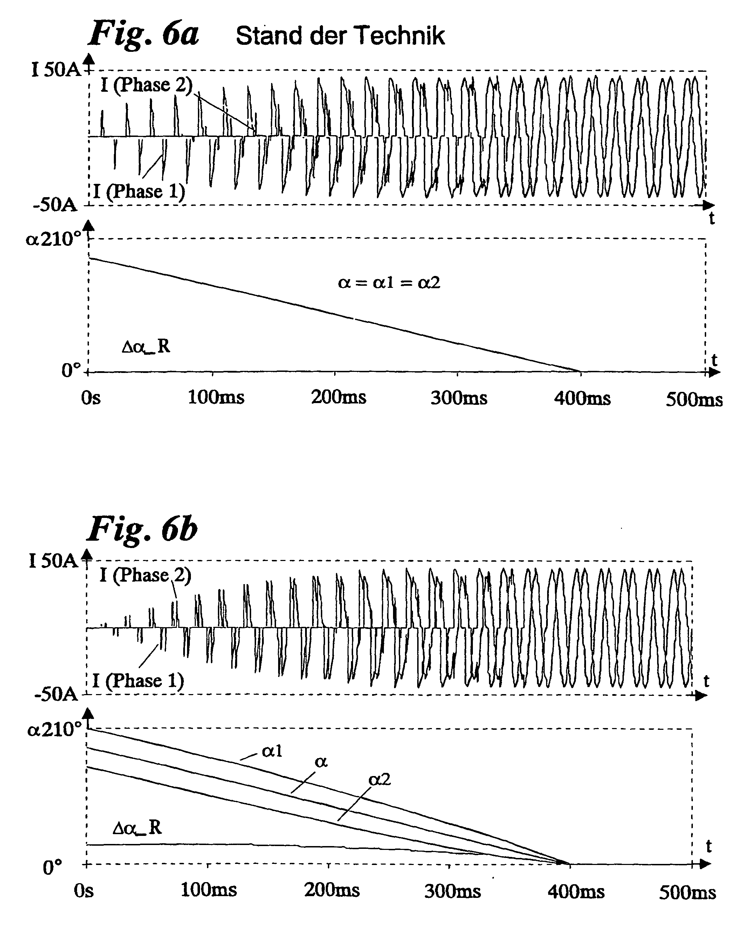

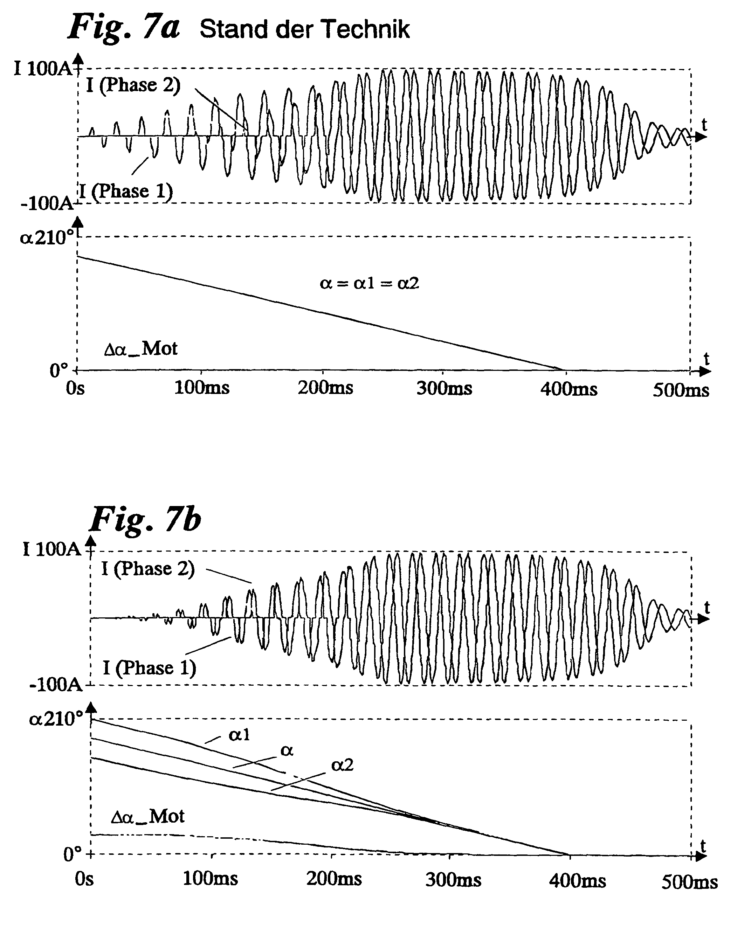

Die Fig. 6 und 7 verdeutlichen die Wirksamkeit der erfindungsgemäßen Zündsteuerung. Dabei stellen die Fig. 6a, 7a Kurvenverläufe mit asymmetrisch aufgebauten und symmetrisch gesteuerten Drehstromstellern nach dem Stand der Technik und die Fig. 6b, 7b Kurvenverläufe mit asymmetrisch aufgebauten Drehstromstellern und asymmetrischer Zündsteuerung gemäß der Erfindung dar. Dabei ist aus den I = f (t) - Verläufen (Fig. 6a und Fig. 7a oberer Teil) bei einer Ansteuerung gemäß dem Stand der Technik gut erkennbar, dass die Amplituden des zweiten gesteuerten Phasenzweiges erst verspätet das Niveau der ersten gesteuerten Amplitude erreichen. Hierdurch werden die eingangs beschriebenen nachteiligen Steuerungseigenschaften verursacht.

Die Fig. 6b und 7b veranschaulichen im Gegensatz hierzu die Kurvenverläufe I = f(t) bei einer erfindungsgemäßen Ansteuerung der Halbleiterschaltungen 2. Hierdurch sind beide angesteuerten Phasen von Beginn an mit nahezu gleicher Amplitude wirksam.

## Patentansprüche

1. Verfahren zum Betreiben einer Drehstromstellerschaltung, insbesondere Sanftanlaufgerät für Drehstrommotoren, die in zwei von drei Phasenzweigen (L1-T1, L2-T2, L3-T3) jeweils eine steuerbare Halbleiterschaltung (2) aufweist **dadurch gekennzeich-**

**net, dass** die Ansteuerung der beiden Halbleiterschaltungen (2) mit unterschiedlichen Zündwinkeln erfolgt, wobei ausgehend vom ungesteuerten Phasenzweig die im Phasenzweig mit der voreilenden Spannung (uj) angeordnete steuerbare Halbleiterschaltung (2) um den Korrekturwinkel $+\Delta\alpha$ und die im Phasenzweig mit der nacheilenden Spannung (uk) angeordnete Halbleiterschaltung (2) um den Korrekturwinkel $-\Delta\alpha$ phasenverschoben angesteuert wird.

2. Verfahren nach Anspruch 1, **dadurch gekennzeichnet, dass** bei einem Zündwinkel $\alpha$ = 0° der Korrekturwinkel $\Delta\alpha$ = 0° und bei einem Zündwinkel $\alpha$ = 180° der Korrekturwinkel $\Delta\alpha$ = 30 ° beträgt.

3. Verfahren nach Anspruch 2, **dadurch gekennzeichnet, dass** die Zündwinkelkorrektur durch Addition des Korrekturwinkels $\Delta\alpha$ zum Zündwinkel $\alpha$ und in Form einer stetigen und monotonen Funktion erfolgt.

4. Verfahren nach Anspruch 2 oder 3, **dadurch gekennzeichnet, dass** die Zündwinkelkorrektur im Korrekturwinkelbereich 0° < $\Delta\alpha$ < 30° in Abhängigkeit von der Last (L) erfolgt.

5. Verfahren nach einem oder mehreren der vorherigen Ansprüche, **dadurch gekennzeichnet, dass** ein in den zwei steuerbaren Phasen veränderbarer Parameter ausgewählt wird und die asymmetrische Ansteuerung in Abhängigkeit von diesem Parameter erfolgt, derart, dass der ausgewählte Parameter in seinem Betrag in allen drei Phasen angeglichen wird.

6. Verfahren nach einem oder mehreren der vorherigen Ansprüche, **dadurch gekennzeichnet, dass** der Parameter der Phasenstrom oder die Phasenspannung oder die in den Phasen auftretende Leistung ist.

7. Verfahren nach einem oder mehreren der vorherigen Ansprüche, **dadurch gekennzeichnet, dass** der Parameter die in den steuerbaren Halbleiterschaltungen (2) entstehende Verlustleistung ist.

## Claims

1. Method of operation of a three-phase control circuit, in particular a soft starting device for three-phase motors, which has a controllable semiconductor circuit (2) in each of two of three phase branches (L1-T1, L2-T2, L3-T3) **characterized in that** the two semiconductor circuits (2) are driven with different delay angles in which case, starting from the uncontrolled phase branch, the controllable semiconductor circuit (2) which is arranged in the phase branch with the leading voltage (uj) is phase-shifted through the correction angle $+\Delta\alpha$, and the semiconductor circuit (2) which is arranged in the phase branch with the lagging voltage (uk) is phase-shifted through the correction angle $-\Delta\alpha$.

2. Method according to Claim 1, **characterized in that**, if the delay angle is $\alpha = 0°$, the correction angle is $\Delta\alpha = 0°$, and if the delay angle is $\alpha = 180°$, the correction angle is $\Delta\alpha = 30°$.

3. Method according to Claim 2, **characterized in that** the delay angle correction is carried out by addition of the correction angle $\Delta\alpha$ to the delay angle $\alpha$, and in the form of a continuous and monotonal function.

4. Method according to Claim 2 or 3, **characterized in that** the delay angle correction is carried out in the correction angle range $0° < \Delta\alpha < 30°$ as a function of the load (L).

5. Method according to one or more of the preceding claims, **characterized in that** a parameter which can be varied in the two controllable phases is selected, and the asymmetric drive is carried out as a function of this parameter in such a way that the magnitude of the selected parameter is matched in all three phases.

6. Method according to one or more of the preceding claims, **characterized in that** the parameter is the phase current, the phase voltage or the power which is present in the phases.

7. Method according to one or more of the preceding claims, **characterized in that** the parameter is the power loss which occurs in the controllable semiconductor circuits (2).

## Revendications

1. Procédé pour faire fonctionner un circuit contrôleur à courant triphasé, notamment appareil de démarrage en douceur pour moteurs à courant triphasé, qui présente à chaque fois un circuit à semiconducteur commandable (2) dans deux des trois branches de phase (L1-T1, L2-T2, L3-T3), **caractérisé en ce que** la commande des deux circuits à semiconducteur (2) s'effectue à des angles d'amorçage différents, en partant de la branche de phase non commandée, le circuit à semiconducteur commandable (2) disposé dans la branche de phase avec la tension en avance (uj) étant commandé en déphasage de l'angle de correction $+\Delta\alpha$ et le circuit à semiconducteur (2) disposé dans la branche de phase avec la tension en retard (uk) étant commandé en déphasage de l'angle de correction $-\Delta\alpha$.

2. Procédé selon la revendication 1, **caractérisé en ce que** pour un angle d'amorçage $\alpha = 0°$, l'angle de correction $\Delta\alpha = 0°$ et pour un angle d'amorçage $\alpha = 180°$, l'angle de correction $\Delta\alpha = 30°$.

3. Procédé selon la revendication 2, **caractérisé en ce que** la correction de l'angle d'amorçage est effectuée en additionnant l'angle de correction $\Delta\alpha$ à l'angle d'amorçage $\alpha$ et sous la forme d'une fonction régulière et monotone.

4. Procédé selon la revendication 2 ou 3, **caractérisé en ce que** la correction de l'angle d'amorçage s'effectue dans la plage d'angles de correction $0° < \Delta\alpha < 30°$ en fonction de la charge (L).

5. Procédé selon une ou plusieurs des revendications précédentes, **caractérisé en ce qu'**un paramètre pouvant être modifié dans les deux phases commandables est sélectionné et la commande asymétrique s'effectue en fonction de ce paramètre de telle sorte que la valeur du paramètre sélectionné soit harmonisée dans toutes les trois phases.

6. Procédé selon une ou plusieurs des revendications précédentes, **caractérisé en ce que** le paramètre est le courant de la phase ou la tension de la phase ou encore la puissance produite dans les phases.

7. Procédé selon une ou plusieurs des revendications précédentes, **caractérisé en ce que** le paramètre est la perte de puissance produite dans les circuits à semiconducteur commandables (2).

Fig. 1a

Fig. 1b

Fig. 1c

Fig. 1d

Fig. 1e

Fig. 2a

Fig. 2b

Fig. 2c

Fig. 2d

Fig. 2e

Fig. 3a

Fig. 3b

Fig. 3c

Fig. 3d

Fig. 3e

Fig. 4a

Fig. 4b

Fig. 4c

| α [°] | Widerstandslast | | | Motorlast (ASM, 11kW) | | |
|---|---|---|---|---|---|---|
| | Δα_R [°] | α1_R [°] | α2_R [°] | Δα_Mot [°] | α1_Mot [°] | α2_Mot [°] |
| 0 | 0 | 0 | 0 | 0 | 0 | 0 |
| 30 | 15 | 45 | 15 | 0,5 | 30,5 | 29,5 |
| 60 | 22 | 82 | 38 | 2 | 62 | 58 |
| 80 | 25 | 105 | 55 | 7 | 87 | 73 |
| 100 | 27 | 127 | 73 | 15 | 115 | 85 |
| 120 | 29 | 149 | 91 | 22 | 142 | 98 |
| 150 | 30 | 180 | 120 | 29 | 179 | 121 |
| 180 | 30 | 210 | 150 | 30 | 210 | 150 |

## Fig. 5a

Fig. 5b

Fig. 5c

**Fig. 6a** Stand der Technik

**Fig. 6b**

## *Fig. 7a*  Stand der Technik

$\alpha = \alpha 1 = \alpha 2$

$\Delta \alpha\_Mot$

## *Fig. 7b*

$\alpha 1$

$\alpha$

$\alpha 2$

$\Delta \alpha\_Mot$